Europäisches Patentamt

European Patent Office

Office européen des brevets

(19)

(11) **EP 0 736 847 A2**

(12) **EUROPÄISCHE PATENTANMELDUNG**

(43) Veröffentlichungstag:
   **09.10.1996 Patentblatt 1996/41**

(51) Int. Cl.⁶: **G07C 7/00**

(21) Anmeldenummer: **96104476.5**

(22) Anmeldetag: **21.03.1996**

(84) Benannte Vertragsstaaten:
   **AT CH DE FR GB LI SE**

(30) Priorität: **06.04.1995 DE 19512903**

(71) Anmelder: **VDO Adolf Schindling AG**
   **D-60326 Frankfurt/Main (DE)**

(72) Erfinder: **Adams, Jürgen, Dipl.-Ing. (FH)**
   **78052 Villingen-Schwenningen (DE)**

(54) **Kommunikationsschnittstelle zwischen einem Rechner und einem Fahrzeuggerät**

(57)   Zur Vereinfachung einer Kommunikationsschnittstelle zwischen einem Rechner und einem Fahrzeuggerät wird vorgeschlagen, daß mindestens ein flächiges Funktionselement des Fahrzeuggerätes als Gegenelektrode zu einer Elektrode (10) eines von außen an das Fahrzeuggerät anlegbaren, mit einem Rechner (30) verbundenen kapazitiven Koppeladapters (11) ausgebildet ist.

FIG. 2

EP 0 736 847 A2

**Beschreibung**

Die Erfindung betrifft eine Kommunikationsschnittstelle zwischen einem Rechner und einem Fahrzeuggerät. Diverse Ausbildungen von Kommunikationsschnittstellen zwischen einem Rechner und einem Fahrzeuggerät sind bekannt, zB galvanische Kopplungen mittels einer Steckverbindung, optische Kopplungen über eine Infrarotdatenübertragungsstrecke oder induktive Kopplungen über transformatorische Spulenanordnungen. Alle diese Vorrichtungen erfordern im Fahrzeuggerät zusätzliche Mittel, die Kosten verursachen sowie zusätzlichen Bauraum benötigen.

Es ist die Aufgabe der vorliegenden Erfindung, eine gattungsgemäße Kommunikationsschnittstelle zwischen einem Rechner und einem Fahrzeuggerät zu vereinfachen und damit preiswerter zu gestalten.

Die Aufgabe wird durch die Merkmale des ersten Anspruchs gelöst. Die abhängigen Ansprüche zeigen vorteilhafte Ausgestaltungen und Weiterbildungen der gefundenen Lösung.

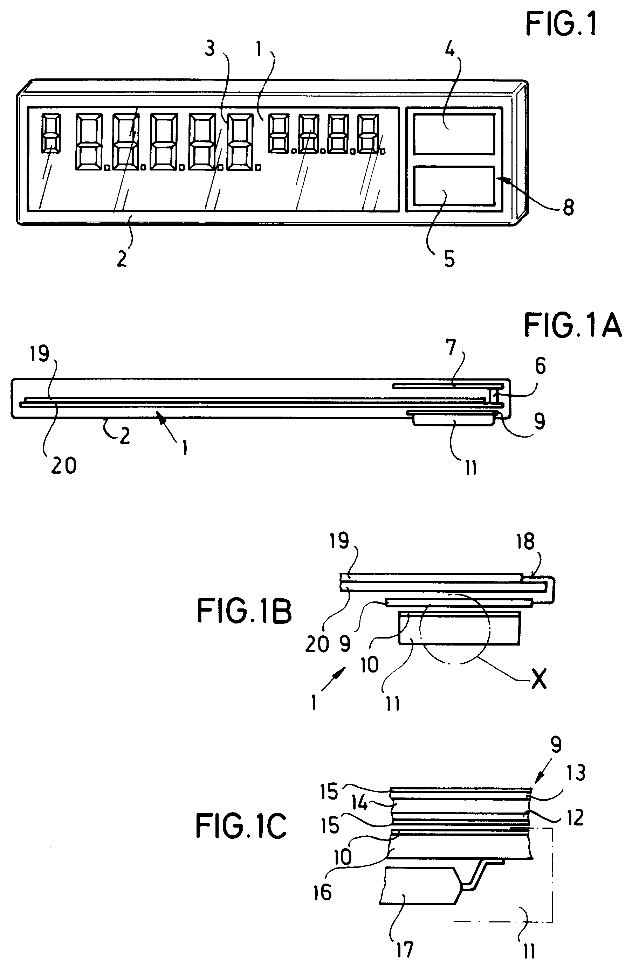

Nachstehend soll die gefundene Lösung am Beispiel eines Taxameters als Fahrzeuggerät in Verbindung mit fünf Figuren erläutert werden. Bei dieser Anwendung sind zB Tarifdaten von einem Rechner zum Taxameter oder Schichtdaten von einem Taxameter zu einem nicht zum Fahrzeug gehörenden Rechner zu übertragen. Wie aus **Figur 1** entnehmbar ist, verfügt ein moderner elektronischer Taxameter über einen Elektronikträger 1, der in einem das Gerätegehäuse bildenden Trägerrahmen 2 gehaltert ist und der frontseitig zumindest Anzeigemittel 3 sowie Bedienelemente 4 und 5 enthält, wobei letztere vorzugsweise als flächige Folientasten ausgebildet sind. Die Anzeigemittel 3 sind zumindest in ihrem aktiven Anzeigebereich durch ein transparentes Frontglas abgedeckt.

**Figur 1A** zeigt einen Längsschnitt durch den Trägerrahmen 2 in der Draufsicht. Durch einen Leitverbinder 6 vom Elektronikträger 1 beabstandet ist in dem Trägerrahmen 2 hinter der durch die Bedienelemente 4 und 5 gebildeten Tastenanordnung ein Träger 7 für eine nicht näher dargestellte Hilfsschaltung angebracht, die auch das Netzteil des Gerätes sowie die Anschlußbeschaltung für einen Weggeber beinhalten kann.

Die Ausschnittsvergrößerung gemäß der **Figur 1B** zeigt den Aufbau der Bedienelemente 4 und 5. Auf der Leiterplatte 20 des Elektronikträgers 1 befindet sich auf der der Gerätefront zugewandten Seite im Tastenfeld 8 eine Folientastatur 9 in elektrischer Verbindung 18 mit der Elektronik 19 des Trägers 1. Auf dieses Tastenfeld bzw. auf mindestens eine Taste der Tastatur ist die Elektrode 10 des Koppeladapters 11 von außen aufsetzbar.

Bei einer Folientastatur wird, wie es die nochmalige Ausschnittsvergrößerung X aus Figur 1B in der **Figur 1C** zeigt, durch manuelle Betätigung eine Deckelektrode 12 auf eine im Gerät stationär angeordnete Rückelektrode 13 aufgedrückt, wodurch ein Kurzschluß entsteht, der durch eine hier allerdings nicht näher dargestellte Widerstandsbeschaltung in ein elektrisches Signal umgewandelt wird und als solches von einem Mikroprozessor 43, der auf dem Elektronikträger 1 angeordnet ist, auswertbar ist. Deckelektrode 12 und Rückelektrode 13 sind durch einen als Luftpolster ausgebildeten Zwischenraum 14 beabstandet, der beide Elektroden im unbetätigten Zustand der Tastatur voneinander isoliert. Beide Elektroden sind durch ein jeweils nach außen hin schützendes Folienoberflächenmaterial 15 eingekleidet. Die Deckelektrode 12 bildet die geräteseitig vordere Elektrode.

Auf die Fahrzeuggerätefront ist die Elektrode des Koppeladapters 11 derart aufbringbar, daß eine kapazitive Wirkverbindung zu mindestens einer Elektrode eines Funktionselementes des Fahrzeuggerätes entsteht. In der Regel bilden jedoch die Deckelektrode 12 und die Rückelektrode 13 zusammen das Koppelelement im Fahrzeuggerät zur Herstellung der kapazitiven Übertragungsstrecke, wenn von außen an das Fahrzeuggerät die Elektrode 10 eines Koppeladapters 11 angelegt wird. Der Trägerrahmen 2 und das Gehäuse des Koppeladapters 11 sind vorteilhafter Weise so zu gestalten, daß die Elektrode 10 des Koppeladapters 11 parallel zum Koppelelement des Fahrzeuggerätes geführt wird. Ferner ist der Koppeladapter 11 konstruktiv so gestaltet, daß er die für den Datentransfer erforderliche Elektronik enthalten kann, welche zB aus einem auf einer Leiterplatte 16 aufgebrachten integrierten Schaltkreis 17 besteht.

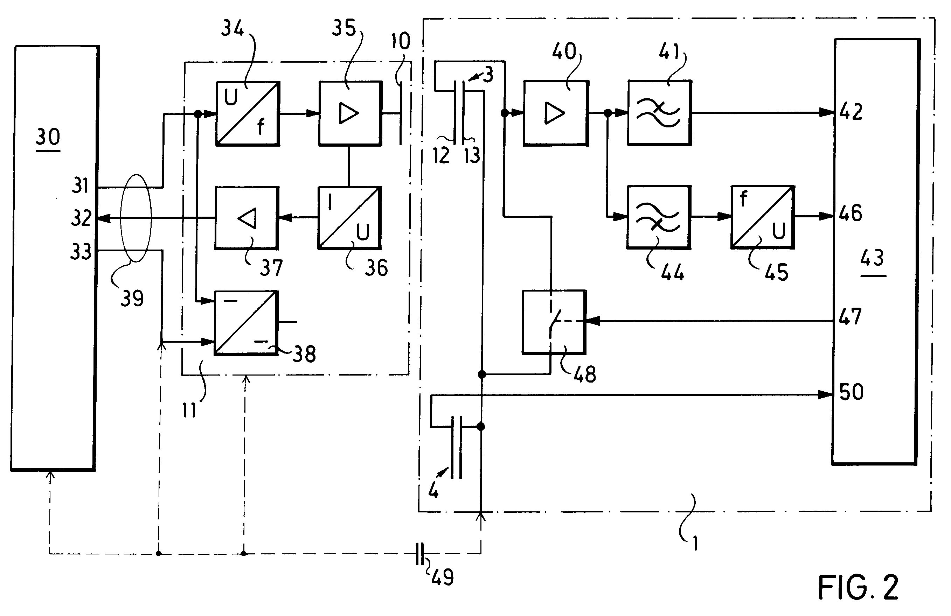

**Figur 2** zeigt die Funktionsweise der Schnittstelle. Der Koppeladapter 11 wird elektrisch leitend mit einem vorzugsweise mobilen Rechner 30, zB einem Laptop, verbunden. Der Datentransfer zwischen dem Rechner 30 und dem Koppeladapter 11 erfolgt über eine serielle Schnittstelle 39 des Rechners 30, die rechnerseitig über einen Datenausgang 31, einen Dateneingang 32 sowie über eine Masseleitung 33 als Bezugspotential verfügt. Die zu transferierenden Daten werden in Form von Impulssequenzen, dh in Form eines Bit-Datenstromes übertragen. Der Koppeladapter 11 selbst enthält als Funktionseinheiten für den Sendebetrieb von Daten zum Fahrzeuggerät einen Trägeroszillator 34 und einen Signalverstärker 35, für den Empfangsbetrieb von Daten vom Fahrzeuggerät einen Strom-Spannungsumsetzer 36 und einen Signalverstärker 37 sowie für beide Betriebsarten mindestens eine Elektrode 10 als Koppelelement oder physikalische Schnittstelle zum Fahrzeuggerät. Die Energieversorgung der elektronischen Funktionseinheiten des Koppeladapters 11 erfolgt in vorteilhafter Weise über einen Gleichspannungswandler 38, der die benötigte elektrische Energie dem Datenausgang 31 mit Bezug auf die Masseleitung 33 der Serialschnittstelle 39 des Rechners 30 entnimmt. Der Trägeroszillator 34 wird in Abhängigkeit von der Bit-Präsentation am Datenausgang 31 des Rechners 30 moduliert. Auch wenn hier beispielhaft die Ausgestaltung der Erfindung für die Anwendung des Halbduplexverfahrens zur Datenübertragung dargestellt ist, so soll sie jedoch nicht darauf beschränkt sein.

Die Elektrode 10 des Koppeladapters 11 wird zum Transfer eines Datenstromes von oder zu einem Fahrzeuggerät in kapazitive Wirkverbindung mit der Deckelektrode 12 der Folientastatur des Fahrzeuggerätes gebracht. Dazu wird der Koppeladapter 11 entweder von einem Bediener mit der Hand dicht vor die Tastenfläche des Fahrzeuggerätes gehalten oder es sind für die Aufnahme des Adapters geeignete Haltevorrichtungen am Fahrzeuggerät ausgebildet. Nach dem Starten eines Programmes im Rechner 30 kann der Datenaustausch zwischen dem Rechner 30 und dem Fahrzeuggerät erfolgen. Bedarfsweise können mittels der Anzeige des Fahrzeuggerätes oder der Anzeige des Rechners 30 diverse Meldungen ausgegeben werden. Insbesondere können auf diese Weise Fehlermeldungen infolge fehlerhafter Signalkopplung angezeigt werden, wenn zB der Adapter vorzeitig aus seiner Betriebsposition am Fahrzeuggerät entfernt wird.

Die Deckelektrode 12 der Folientastatur ist mit einer Eingangsschaltung 40 verbunden, die über einen hochohmigen Signaleingang verfügt und als Transistorverstärker ausgeführt sein kann. Diese Eingangsschaltung 40 ist in der Lage, sowohl ein statisches Signal, wie einen Kurzschluß zwischen der Deckelektrode 12 und der Rückelektrode 13, als auch ein vom Koppeladapter 11 kapazitiv eingekoppeltes Wechselspannungssignal aufzunehmen und zu verstärken. Wird die Tastenfläche des Bedienelementes manuell betätigt, werden die Elektroden 12 und 13 kurzgeschlossen und die Eingangsschaltung 40 gibt über einen Tiefpaß 41 ein Signal an den entsprechenden Eingang 42 des Mikroprozessors 43 zur Auswertung des Tastensignals. Wenn hingegen aus dem Koppeladapter 11 ein Trägersignal kapazitiv in die Deckelektrode 12 der Folientastatur eingekoppelt wird, gelangt dieses Signal von der Eingangsschaltung 40 über einen Hochpaß 44 zu einem Frequenzdiskriminator 45, der nach einer entsprechenden Frequenzselektion ein impulsartiges logisches Signal bzw. eine Signalfolge aus 0 und 1-Bits erzeugt und an den Dateneingang 46 des Mikroprozessors 43 abgibt. Die Frequenz des Trägersignals ist höher auszulegen als die Frequenz der zu übertragenden Datenbits. Es hat sich als vorteilhaft erwiesen, die Trägersignalfrequenz höher als 200 kHz zu wählen.

Im Fall der Auskopplung von Daten bzw. eines durch eine Sequenz von Bits gebildeten Datenstromes vom Fahrzeuggerät zum Koppeladapter 11 und damit letztlich zum Rechner 30 hin werden die Elektroden 12 und 13 der Folientastatur im Takt der vom Mikroprozessor 43 über dessen Datenausgang 47 abgegebenen Datenbits durch die Schaltvorrichtung 48 niederohmig kurzgeschlossen. Dadurch wird das vom Koppeladapter 11 in die Deckelektrode 12 induzierte Trägersignal, das jetzt im Lesebetrieb ohne Modulation durch koppeladapterseitig zu übertragende Datenbits dort ansteht, in Abhängigkeit von der niedrigen Impedanz absorbiert, die aus der Kapazität der Signalübertragungsstrecke zwischen den Elektroden 10 und 12 und dem Innenwiderstand der Schaltvorrichtung 48 gebildet wird und sich einstellt, wenn vom Mikroprozessor 43 an dessen Datenausgang 47 logische 1-Bits abgegeben werden, wodurch im Koppeladapter 11 die zu übertragende Bitfolge durch Ermittlung der Änderungen im Energiebedarf des Signalverstärkers 35 durch den Strom-Spannungsumsetzer 36 detektierbar und dann über einen Signalverstärker 37 dem Rechner 30 zuführbar wird. Denn der fahrzeuggeräteseitige Kurzschluß der Elektroden 12 und 13 entnimmt dem von der Elektrode 10 des Koppeladapters 11 eingespeisten elektrischen Feld Energie. Da die Betriebsspannung des Signalverstärkers 35 konstant ist, reagiert er bei Abgabe von Energie an die kapazitive Übertragungsstrecke zwischen Koppeladapter 11 und Fahrzeuggerät mit einem erhöhten Strombedarf, was durch den Strom-Spannungsumsetzer 36 festgestellt und zur Datensignalerzeugung genutzt werden kann.

Um einen Verschiebungsstrom in den Elektroden 12 und 13 der Tastatur oder der Elektrode 10 des Koppeladapter 11 fließen zu lassen, ist es erforderlich, den Stromkreis zwischen Fahrzeuggerät und Koppeladapter zu schließen. Dazu kann die durch den Körper des Bedieners selbst zur Umgebung gebildete virtuelle Kapazität 49 genutzt werden. Dieser Effekt wird durch die Masseverschaltung sowohl des Koppeladapters 11 bzw. des Rechners 30 als auch des Fahrzeuggerätes mit dem Fahrzeug erreicht. Der Körper des Bedieners ist hinreichend leitfähig, um bei galvanischem Kontakt mit dem Koppeladapter 11 oder mit dem Rechner im Fahrzeuginneren je nach Aufenthaltsort eine Kapazität zwischen 100 pF und mehreren nF zu bilden. Vergleichsweise beträgt die Koppelkapazität C zu den Schaltflächen der Tasten gemäß dem formelmäßigen Zusammenhang $C = \varepsilon_0 \varepsilon_r A/d$ etwa 10 pF bis 50 pF, wobei die Größe A die für die Kopplung wirksame Fläche und d den Abstand der koppelnden Elektroden bezeichnet, $\varepsilon_0$ für die elektrische Feldkonstante steht und $\varepsilon_r$ die durch die beteiligten Werkstoffe bestimmte Dielektrizitätszahl des zwischen den Elektroden befindlichen Dielektrikums ist. Empirisch wurde gefunden, daß der Betrag der Fläche A ca. 80 % des arithmetischen Mittelwertes der Flächen aus der Koppelelektrode 10 des Koppeladapters 11 sowie aus den an der Kopplung beteiligten Tastenflächen beträgt. Als weitere Möglichkeit zur Signalrückführung kann eine weitere real ausgebildete Koppelelektrode im Koppeladapter 11 vorgesehen werden, die an eine weitere Tastenfläche des Fahrzeuggerätes angelegt wird, so daß die Koppelkapazität dieser zweiten Tastenfläche die Verschiebungsströme durch die Koppelkapazität der ersten Tastenfläche zuläßt.

Optional kann wenigstens eine Elektrode des aus der Folientastatur gebildeten Koppelelementes fahrzeuggeräteseitig permanent mit einer Wechselspannung beaufschlagt werden, um den Betriebszustand des Taxameters anzuzeigen, der beim Anlegen eines Koppeladapters durch dessen Elektronik unmittelbar ausgewertet und einem Rechner zur Interpretation zugeleitet werden kann. Diese Ausgestaltung der Erfindung führt zu einer baulichen Vereinfachung des Koppeladapters 11, was für Serviceanwendungen interessant sein kann. Auch können mehrere Tasten des Fahrzeuggerätes so verschaltet sein, daß einerseits bei der Betätigung einer dieser Tasten ein Schaltsignal dem auswertenden Mikroprozessor 43 individuell zugeführt wird, daß jedoch andererseits bei der Datenkopplung ein koppelndes Trägersignal zur Verbesserung der Kopplungsqualität durch Vergrößerung der Koppelfläche parallel von allen Tasten abgenommen und über den zuvor beschriebenen Signalweg, dh über die Funktionsgruppen 40, 44 und 45, dem Mikroprozessor 43 zugeleitet wird. In der Figur 2 ist die Taste 4 ohne funktionelle Wirkung für eine Datenkopplung als reines Schaltelement dargestellt, wobei das Schaltsignal einem Eingang 50 des auswertenden Mikroprozessors 43 zugeführt wird. Ferner kann die Kommunikation zwischen dem Mikroprozessor 43 und dem Rechner 30 bei entsprechender Programmierung nicht nur kopplerseitig, wie bisher beschrieben, sondern auch fahrzeugseitig eröffnet werden, nachdem der Koppeladapter 11 an das Fahrzeuggerät angelegt worden ist.

In Abänderung des obigen Ausführungsbeispiels können für die Datenkopplung auch als LCD (liquid cristal display) ausgebildete Anzeigemittel 3 verwendet werden. Derartige Anzeigemittel verfügen aufgrund ihrer Konstruktion ebenfalls über eine flächige Elektrodenstruktur, die zB durch die Segmentelektroden ausgebildet ist. Diese Elektrodenstruktur kann durch geeignete Schaltungsmaßnahmen als Gegenelektrode zur Elektrode 10 des Koppeladapters 11 nutzbar gemacht werden. Treiberschaltungen zum Betrieb von LCD-Anzeigen sind im allgemeinen sehr hochohmig. Daher kann ein von einem Koppeladapter 11 kapazitiv in die Elektrodenstruktur der LCD eingekoppeltes Trägersignal wie bei der zuvor beschriebenen Tastenapplikation einer im Fahrzeuggerät vorgesehenen erfindungsgemäßen Auswerteschaltung zugeführt werden. Falls die Anzeige der LCD während der Datenübertragung sichtbar bleiben muß, sollte die Elektrode 10 des Koppeladapters 11 transparent oder zumindest teiltransparent, zB in Form eines Metallgitters, ausgebildet werden. Auch dadurch kann eine kostengünstige Lösung für eine Kommunikationsschnittstelle zwischen einem nicht zum Fahrzeug gehörenden Rechner und einem Fahrzeuggerät durch Mehrfachnutzung bereits im oder am Fahrzeuggerät vorhandener Mittel realisiert werden.

## Patentansprüche

1. Kommunikationsschnittstelle zwischen einem Rechner und einem Fahrzeuggerät,
dadurch gekennzeichnet,
daß mindestens ein flächiges Funktionselement des Fahrzeuggerätes als Gegenelektrode zu einer Elektrode (10) eines von außen an das Fahrzeuggerät anlegbaren, mit einem Rechner (30) verbundenen kapazitiven Koppeladapters (11) ausgebildet ist.

2. Kommunikationsschnittstelle nach Anspruch 1, dadurch gekennzeichnet,
daß das flächige Funktionselement ein Bedienelement (4 oder 5) oder ein Anzeigemittel (3) des Fahrzeuggerätes ist.

3. Kommunikationsschnittstelle nach Anspruch 1, dadurch gekennzeichnet,
daß die Elektrode (10) des Koppeladapters (11) transparent oder halbtransparent ausgeführt ist.

4. Kommunikationsschnittstelle nach einem der vorangegangenen Ansprüche, dadurch gekennzeichnet,
daß der Koppeladapter (11) als Funktionseinheiten für den Sendebetrieb von Daten zum Fahrzeuggerät über einen Trägeroszillator (34) und einen Signalverstärker (35), für den Empfangsbetrieb von Daten vom Fahrzeuggerät über einen Strom-Spannungsumsetzer (36) und einen Signalverstärker (37) sowie für beide Betriebsarten über mindestens eine Koppelelektrode (10) als Schnittstelle zum Fahrzeuggerät verfügt.

5. Kommunikationsschnittstelle nach Anspruch 7, dadurch gekennzeichnet,
daß die Funktionseinheiten des Koppeladapters (11) über einen Gleichspannungswandler (38) aus der Serialschnittstelle des mit ihm verbundenen Rechners (30) stromversorgt werden.

6. Kommunikationsschnittstelle nach einem der vorangegangenen Ansprüche, dadurch gekennzeichnet,
daß das Fahrzeuggerät über eine mit einem hochohmigen Signaleingang versehene Eingangsschaltung (40) verfügt, die in elektrischer Verbindung mit der mindestens einen, die Gegenelektrode zum Koppeladapter (11) bildenden Elektrode (12) des Fahrzeuggerätes steht und in der Lage ist, sowohl ein vom Koppeladapter (11) kapazitiv eingekoppeltes Wechselspannungssignal als auch im Fall der Ausbildung des fahrzeugseitigen Koppelelementes als schaltbares Bedienelement ein Schaltsignal aufzunehmen und zu verstärken.

7. Kommunikationsschnittstelle nach Anspruch 9, dadurch gekennzeichnet,
daß die Eingangsschaltung (40) einerseits bei einer manuellen Betätigung der Tastenfläche des Bedienelementes (3) ein Signal über einen Tiefpaß (41) an den Mikroprozessors (43) abgibt und andererseits bei der kapazitiven Einkopplung eines Wechselspannungssignals durch den Koppeladapter (11) ein Signal über einen Hochpaß (44) zu einem Frequenzdiskriminator (45) leitet, wobei dieser nach einer Frequenzselektion ein logisches Signal an den Mikroprozessors (43) abgibt.

8. Kommunikationsschnittstelle nach einem der vorangegangenen Ansprüche, dadurch gekennzeichnet,
daß im Fall der Auskopplung von Daten vom Fahrzeuggerät zum Koppeladapter (11) das Koppelelement im Fahrzeuggerät im Takt der vom Mikroprozessor (43) zur Übertragung abgegebenen Datenbits durch eine Schaltvorrichtung (48) niederohmig kurzgeschlossen wird, wodurch dem vom Koppeladapter (11) zur Gegenelektrode im Fahrzeuggerät aufgebauten elektrischen Feld Energie entnommen wird, wobei die Energieentnahme im Koppeladapter (11) wiederum detektiert wird und ein zu den zu übertragenden Daten proportionales Signal zur Weiterleitung an den Rechner (30) erzeugt.

9. Kommunikationsschnittstelle nach einem der vorangegangenen Ansprüche, dadurch gekennzeichnet,
daß der Stromkreis zwischen Fahrzeuggerät und Koppeladapter durch eine virtuelle Kapazität (49) geschlossen wird, die der Körper eines Bedieners bei galvanischem Kontakt mit dem Koppeladapter (11) oder mit dem Rechner (30) zur Umgebung bildet.

10. Kommunikationsschnittstelle nach einem der vorangegangenen Ansprüche, dadurch gekennzeichnet,
daß der Stromkreis zwischen Fahrzeuggerät und Koppeladapter durch eine weitere Koppelelektrode im Koppeladapter (11) geschlossen wird, die an eine weitere im Fahrzeuggerät vorgesehene Gegenelektrode anlegbar ist.

11. Kommunikationsschnittstelle nach Anspruch 1, dadurch gekennzeichnet,
daß wenigstens eine Elektrode des Koppelelementes im Fahrzeuggerät fahrzeuggeräteseitig permanent mit einer Wechselspannung als Trägersignal für eine Datenübertragung beaufschlagt wird.

FIG.1

FIG.1A

FIG.1B

FIG.1C

EP 0 736 847 A2

FIG. 2

7